# EUROPEAN PATENT APPLICATION

(11) **EP 4 498 276 A1**
(43) Date of publication of application: **29.01.2025**
(21) Application number: 24188722.3
(22) Date of filing: 15.07.2024
(51) Int. Cl.: G06F 30/00, G06F 30/10

(54) **METHODS AND SYSTEMS FOR AUTOMATIC SLOT PROPAGATION**

(30) Priority: 26.07.2023 IN 202341050552; 31.10.2023 US 202318498634
(71) Applicant: Dassault Systemes Solidworks Corporation, Waltham, MA 02451 (US)
(72) Inventor: Krishnamachar, Yatish, Bangalore (IN); Darwatkar, Sachin, Pune (IN); Kanjarkar, Satish Rao, Holliston (US)
(74) Representative: Bandpay & Greuter

(57) **Abstract**

Embodiments perform automatic slot propagation in CAD models. One such embodiment identifies a first instance of a tab feature in a CAD model. The first instance of the tab feature is associated with a corresponding first instance of a slot feature. Next, a second instance of the tab feature in the CAD model is identified, e.g., a tab that does not have a slot. In turn, the slot feature is automatically propagated by creating a second instance of the slot feature in a component of the CAD model. The second instance of the slot feature corresponds to the identified second instance of the tab feature. In this way, embodiments automatically create slots for tabs without slots.

## Description

### BACKGROUND

A number of existing product and simulation systems are offered on the market for the design and simulation of objects, e.g., components, parts, and assemblies of components or parts, among other examples. Such systems typically employ computer-aided design (CAD) and/or computer-aided engineering (CAE) programs. These systems allow a user to construct, manipulate, and simulate complex three-dimensional (3D) models of objects or assemblies of objects, e.g., real-world objects. CAD and CAE systems, thus, provide a representation of modeled objects using edges, lines, faces, polygons, or closed volumes. Lines, edges, faces, polygons, and closed volumes may be represented in various manners, e.g., with non-uniform rational basis-splines (NURBS).

CAD systems manage parts or assemblies of parts of modeled objects, which are mainly specifications of geometry. In particular, CAD files contain specifications, from which geometry is generated. From geometry, a representation is generated. Specifications, geometries, and representations may be stored in a single CAD file or multiple CAD files. CAD systems include graphic tools for representing the modeled objects to designers; these tools are dedicated to the display of complex objects. For example, an assembly may contain thousands of parts. A CAD system can be used to manage models of objects, which are stored in electronic files.

CAD and CAE systems use computer-based models to represent objects. A computer-based model may be programmed in such a way that the model has the properties (e.g., physical, material, or other physics based) of the underlying real-world object or objects that the model represents. Moreover, computer-based models may be used to perform simulations of the real-word objects/environments that the models represent.

### SUMMARY

A common computer-based modeling task, e.g., in CAD and CAE systems, involves components and parts with tabs and slots.

In a computer-based model, e.g., a CAD model, an assembly may include part(s) that may need to be interlocked with adjoining component(s). This interlocking is often done using tabs and slots, where the tabs are configured to physically join, i.e., mate, with the slots. With some existing approaches, when a computer-based model includes multiple instances of a part, e.g., a component, with a tab feature, a corresponding slot must be manually sketched and cut out for each instance of the part. In other current approaches, a corresponding slot is automatically created for a first instance of a part having a tab feature. However, corresponding slots for all other instances of the part must be created manually. Such manual processes are time-consuming, tedious, and inefficient.

Embodiments address the shortcomings of current approaches by providing functionality to automatically propagate slot(s) on component(s), e.g., adjoining components, from one or multiple instances of a tab component in a single operation. If an instance of a tab component does not have a corresponding slot, embodiments can automatically detect a face of a component and propagate a slot on the detected face. Embodiments thus alleviate or ease the ergonomic burden on CAD and other computer-based modeling system users by freeing users from the laborious and repetitive task of manually creating a slot for each tab where slot propagation is desired/needed.

An example embodiment is directed to a computer-implemented method for automatic slot propagation in a CAD model. To begin, the method identifies a first instance of a tab feature. The first instance of the tab feature is associated with a corresponding first instance of a slot feature. Next, the method identifies a second instance of the tab feature. In turn, the method automatically propagates the slot feature by creating a second instance of the slot feature in a component of the CAD model. The created second instance of the slot feature corresponds to the identified second instance of the tab feature.

In an embodiment, identifying the second instance of the tab feature includes identifying a given instance of the tab feature in the CAD model that is not associated with a corresponding instance of the slot feature. In such an embodiment, the identified given instance is the identified second instance of the tab feature. According to one such embodiment, identifying the given instance of the tab feature includes determining that the given instance of the tab feature interfaces with the component of the CAD model.

In another embodiment, creating the second instance of the slot feature in the component of the CAD model includes, based on a tab transform operation associated with the tab feature, applying a slot transform operation to the component of the CAD model.

In yet another embodiment, the method further includes storing, in a data structure associated with the tab feature, a reference to the created second instance of the slot feature. According to an example embodiment, the method further includes storing, in a data structure associated with the created second instance of the slot feature, a reference to the tab feature. In one such embodiment, the reference to the tab feature includes a transform matrix.

In an embodiment, the second instance of the tab feature is identified in response to a user interaction with an interface of a CAD system. According to one such embodiment, the method further includes presenting the interface of the CAD system in response to identifying the second instance of the tab feature.

In another embodiment, the method further includes determining a location update of a given instance of the tab feature and modifying, based on the determined location update, a location of a given instance of the slot feature corresponding to the given instance of the tab feature. In one such embodiment, determining the location update of the given instance of the tab feature includes identifying a mismatch between a location of the given instance of the tab feature in the CAD model and a stored indication of location of the given instance of the tab feature. According to an embodiment, the indication of location is stored in a slot data structure associated with the given instance of the slot feature. In an example embodiment, the stored indication of location includes a spatial transformation matrix.

Another example embodiment is directed to a computer-based system for automatic slot propagation in a CAD model. The system includes a processor and a memory with computer code instructions stored thereon. In such an embodiment, the processor and the memory, with the computer code instructions, are configured to cause the system to implement any embodiments, or combination of embodiments, described herein.

Yet another example embodiment is directed to a non-transitory computer program product for automatic slot propagation in a CAD model. The computer program product includes a computer-readable medium with computer code instructions stored thereon. The computer code instructions are configured, when executed by a processor, to cause an apparatus associated with the processor to implement any embodiments, or combination of embodiments, described herein.

It is noted that embodiments of the method, system, and computer program product may be configured to implement any embodiments, or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 illustrates a problem in existing tools that is solved by embodiments.
FIGs. 2A-B illustrate example interfaces, e.g., software interfaces, CAD interfaces, etc., in which embodiments may be implemented.
FIGs. 3-5 illustrate examples of automatic slot propagation in CAD models according to embodiments.
FIG. 6 is a flowchart of an example method for automatic slot propagation in a CAD model according to an embodiment.
FIGs. 7A and 7B illustrate an example assembly before and the assembly after slot propagation, respectively, according to an embodiment.
FIG. 8 is a schematic illustration of an exemplary CAD model and data structures used in conjunction with the CAD model.
FIG. 9 is a flowchart of a method for automatic slot propagation in a CAD model according to an embodiment.
FIG. 10 is a schematic view of a computer network in which embodiments may be implemented.
FIG. 11 is a block diagram illustrating an example embodiment of a computer node in the computer network of FIG. 10.

### DETAILED DESCRIPTION

A description of example embodiments follows.

In real-world objects, e.g., bridges, cars, buildings, etc., parts, e.g., bridge trusses, sheet metal pieces of a car body, structural members, are often physically interlocked. This interlocking is frequently accomplished using tabs and slots, where tabs on one part are configured to physically join, i.e., mate, with slots on another part, e.g., an adjacent part. Among other benefits, the physical interlocking accomplished by tabs and slots makes it easier to weld parts together and minimizes the need to build complicated fixtures. The design, development, manufacture, and any subsequent improvement of real-world objects that utilize tabs and slots often rely on computer-based design and simulation tools/environments in which the subject real-world objects are represented by computer-based models, e.g., CAD models.

With many existing approaches, creating a computer-based model representing a real-world object with tabs and slots requires a user to manually create a slot for each tab. Some improvements to this fully manual approach have been made, e.g., in SOLIDWORKS^{®} provided by Applicant-Assignee Dassault Systèmes SolidWorks Corporation (Waltham, MA). In SOLIDWORKS^{®}, in particular, when a user creates a tab feature on a part, e.g., a component, a slot feature is automatically created on an adjoining component to house the tab. However, in an assembly that has multiple instances of that part, slots are not automatically created that correspond with tabs on each of the other instances. In this way, when users create a tab on a part, a slot is only created in the location of the first instance of the part. Whereas for other instances of the same part, slots are not propagated. The existing solution in SOLIDWORKS^{®} is to manually create cut-outs to supply the missing slots. This is time consuming and extremely tedious.

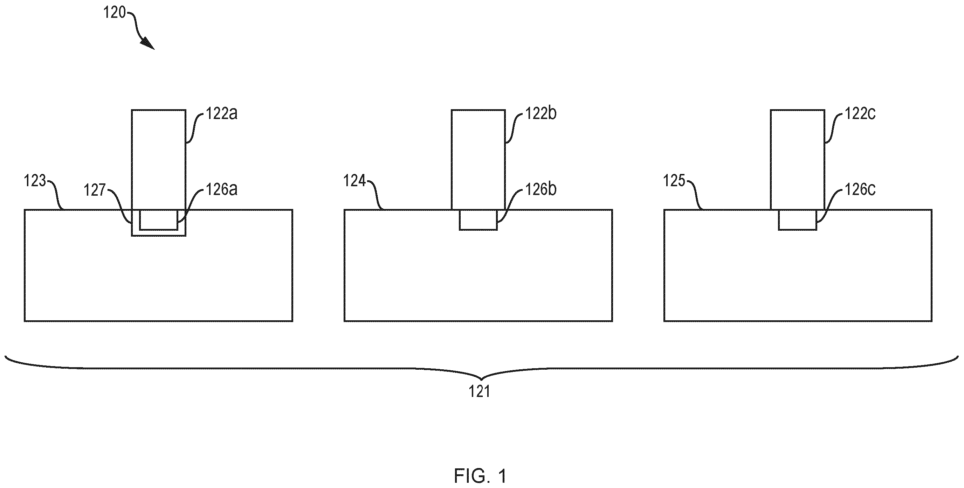

FIG. 1 illustrates an example software interface 120 depicting a problem solved by embodiments. As shown in FIG. 1, interface 120 includes a CAD model 121. CAD model 121 includes part instances 122a, 122b, and 122c, which are adjacent to parts 123, 124, and 125, respectively.

With reference to FIG. 1, consider the problem of manual slot creation discussed above. In an existing SOLIDWORKS^{®} environment, a user may create a tab 126a on part instance 122a and, automatically, a slot 127 is created on part 123. Further, using existing SOLIDWORKS^{®} functionality, when the tab instance 126a is created, the tab is propagated across other part instances, i.e., instances 122b and 122c, as tabs 126b and tabs 126c, respectively. Problematically, however, slots are not automatically created on parts 124 or 125. Embodiments solve this problem.

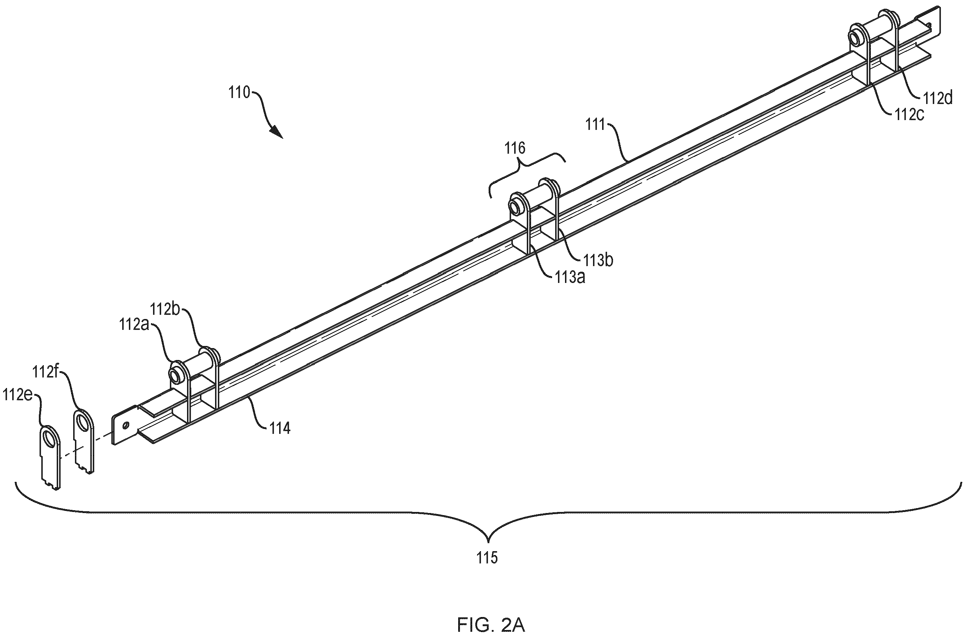

FIG. 2A illustrates an example software interface 110 in which embodiments may be implemented. As shown in FIG. 2A, interface 110 includes a CAD model 111. CAD model 111 includes assembly 115 and subassembly 116, which contain tab component instances 112a-f and 113a-b, respectively. The CAD model 111 also includes component 114.

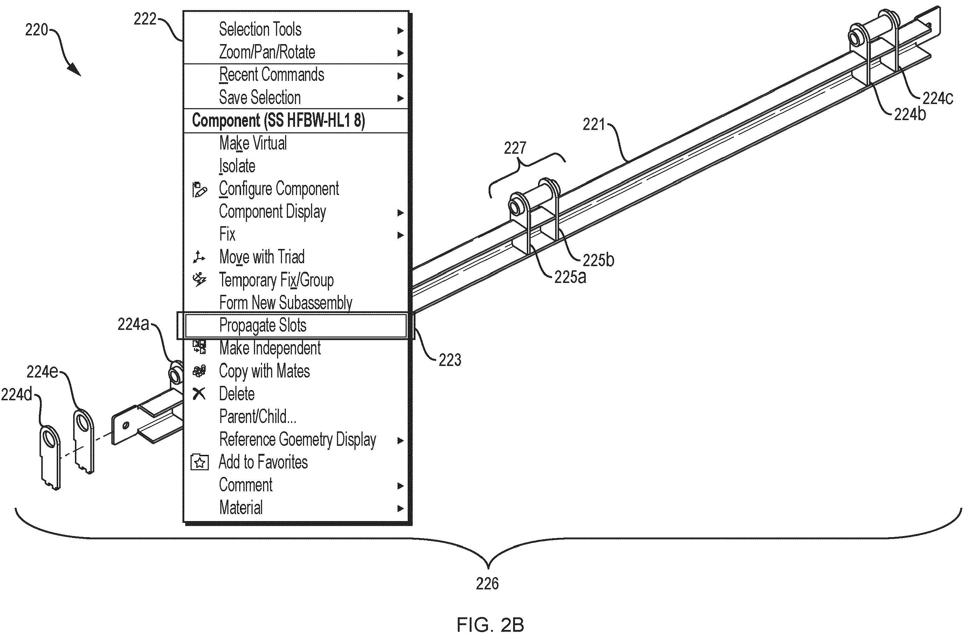

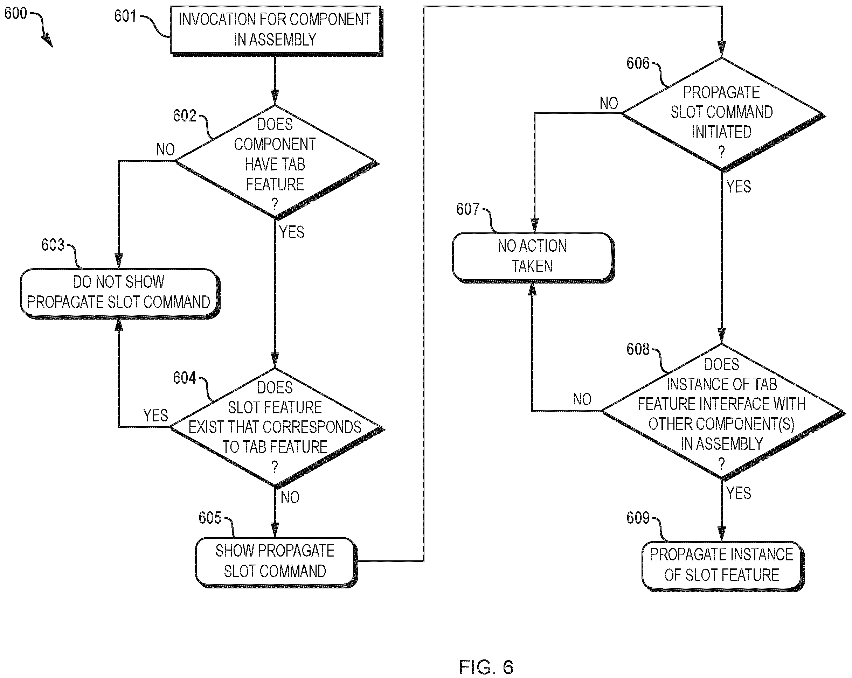

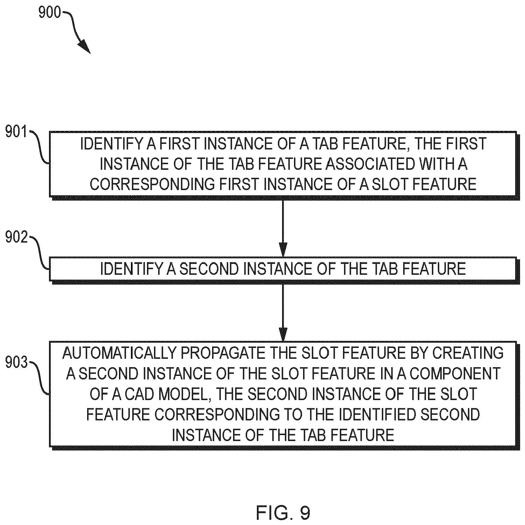

FIG. 2B illustrates another example software interface 220 in which embodiments may be implemented. The interface 220 includes a CAD model 221 and menu 222. The menu 222 includes command 223 for automatic slot propagation in the CAD model 221 according to an embodiment, e.g., method 600 (FIG. 6) or 900 (FIG. 9). As shown in FIG. 2B, the CAD model 221 includes assembly 226, which contains tab component instances 224a-e. The assembly 226 also includes subassembly 227, which contains tab component instances 225a-b. In an embodiment, tab component instance 224a may be displayed with shading and/or coloring in interface 220 to indicate that tab component instance 224a is, e.g., selected by a user and/or designated as a subject of automatic slot propagation (for instance, pursuant to command 223). Similarly, in an embodiment, tab component instances 225a-b may be displayed with shading and/or coloring in interface 220 to indicate, e.g., that instances 225a-b belong to a subassembly, for instance, subassembly 227.

According to an embodiment, when an assembly has a component containing a tab feature, e.g., tab component instance 224a, novel functionality for automatic slot propagation is provided, e.g., methods 600, 900, etc., described herein. Automatic slot propagation may be provided irrespective of how a component is inserted in an assembly, e.g., by inserting the component, by Ctrl (control) + dragging the component, by copying and pasting the component, or by any other known technique for inserting a component in an assembly. In addition, the automatic slot propagation functionality of embodiments may be provided via, e.g., a "Propagate Slots" command, such as menu command 223, in a menu, e.g., menu 222, presented or displayed in response to clicking a right mouse button (RMB) on the component, such as component instance 224a of CAD model 221, or by any other suitable technique known to those of skill in the art.

In an embodiment, when an automatic slot propagation command is invoked, such as via a RMB click as described above, three options, for example, may be provided as follows.

### 1. Selected Instance of Component

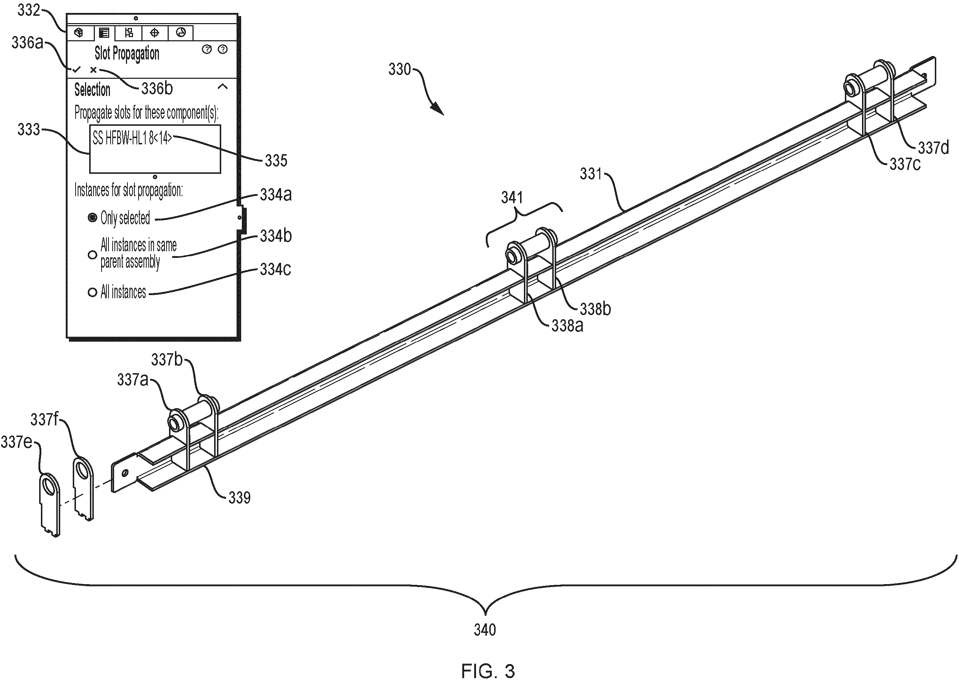

FIG. 3 depicts an interface 330 illustrating an example option for automatic slot propagation in CAD model 331 according to an embodiment. The example option depicted in FIG. 3 is automatic slot propagation for a selected component instance, where the selected component instance has an instance of a tab feature. As shown in FIG. 3, CAD model 331 includes selected tab component instance 337b, which belongs to assembly 340. The assembly 340 also includes tab component instances 337a and 337c-f, as well as subassembly 341. In turn, subassembly 341 includes tab component instances 338a-b. The interface 330 also includes menu 332 with text area 333 and radio buttons 334a-334c. In the example embodiment illustrated in FIG. 3, text area 333 lists an identifier 335 corresponding to selected tab component instance 337b, for which a slot may be propagated. The menu 332 further includes icons or buttons 336a and 336b. In an embodiment, menu 332 may be displayed or presented in response to a user selecting or activating a slot propagation command, e.g., by selecting menu command 223 (FIG. 2B).

In the embodiment of automatic slot propagation illustrated by interface 330, radio button 334a is selected, which indicates that a slot is to be propagated for the selected tab component instance 337b. In turn, identifier 335 corresponding to tab component instance 337b, for which a slot may be propagated, is displayed in text area 333. Optionally, a selected or identified tab component instance, e.g., 337b, may be highlighted, such as by coloring and/or shading, or by any other known highlighting technique, in a graphics area of a CAD interface, e.g., interface 330. To continue, the user selects or activates button 336a or 336b to indicate whether automatic slot propagation for tab component instance 337b should, or should not, proceed, respectively. If the user opts to proceed with slot propagation, a slot is automatically created in component 339 that interfaces with a tab on part instance 337b. It is noted that because FIG. 3 illustrates slot propagation for a selected tab component instance, a slot is propagated for the selected tab instance 337b, and slots are not propagated for the remaining tab instances 337a and 337c-f and 338a-b. It is further noted that, in an embodiment, a slot may be automatically propagated for the selected tab instance 337b based on a pre-existing slot corresponding to a first part instance sharing a common tab feature with instance 337b, where the pre-existing slot was created using the current automatic slot creation techniques described hereinabove.

### 2. Instance(s) of Component in Parent Assembly

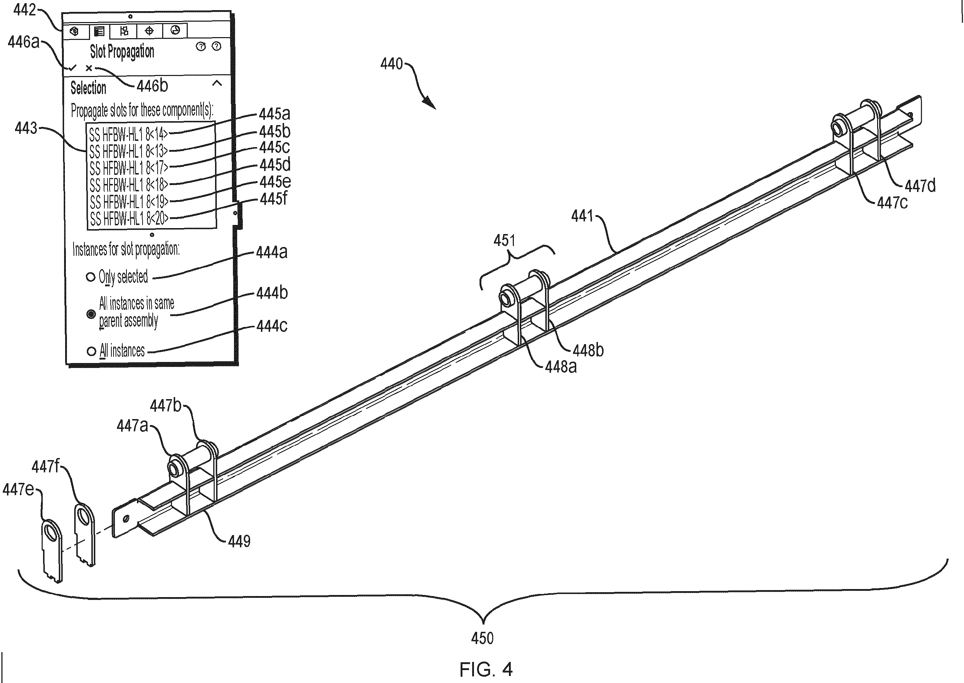

FIG. 4 depicts an interface 440 illustrating an example option for automatic slot propagation in CAD model 441 according to an embodiment. The example option depicted in FIG. 4 is automatic slot propagation for all tab component instance(s) in a given parent assembly. In the example illustrated in FIG. 4, parent assembly 450 includes CAD model 441 and tab component instances 447a-f. The parent assembly 450 also includes subassembly 451, which in turn contains tab component instances 448a-b. As shown in FIG. 4, interface 440 also includes menu 442 with text area 443 and radio buttons 444a-444c. In the example embodiment illustrated in FIG. 4, text area 443 lists identifiers 445a-f corresponding to component instances 447a-f (belonging to the same parent assembly 450), for which slots may be propagated. The menu 442 further includes small icons or buttons 446a and 446b. In an embodiment, menu 442 may be displayed or presented in response to a user selecting or activating a slot propagation command, e.g., by selecting menu command 223 (FIG. 2B).

In the embodiment of automatic slot propagation illustrated by interface 440, radio button 444b is selected, e.g., by the user, which indicates that automatic slot propagation is to be evaluated for other component instance(s) (e.g., 447b-447f) that belong to the same parent assembly as a selected component instance (e.g., 447a). In operation, radio button 444b and component instance 447a are selected. In response, other component instances 447b-f belonging to the same parent assembly as the selected component 447a are identified and associated identifiers 445a-f corresponding to the selected component 447a and identified components 447b-f are listed in text area 443. Optionally, selected or identified tab component instance(s), e.g., 447a-447f, may be highlighted, such as by coloring and/or shading, or by any other known highlighting technique, in a graphics area of a CAD interface, e.g., interface 440. To continue, the user selects or activates button 446a or 446b to indicate whether automatic slot propagation for components 447a-f should, or should not, proceed, respectively. If the user opts to proceed with slot propagation, slots are automatically created in component(s) that interface with tabs in accordance with a selected propagation method, e.g., the method selected using radio buttons 445a-c. In the example of FIG. 4, slots are created in component 449 that interfaces with tabs on part instances 447a-d. It is also noted that corresponding slots are not created for tab instances 447e and 447f because they do not interface with component 449 or any other component. Further, identifiers for tab instances 448a and 448b are not listed in text area 443-and likewise slot propagation is not performed for those instances-because tab instances 448a and 448b do not belong to the assembly 450 of the selected component 447a.

### 3. Instance(s) of Component in CAD Model

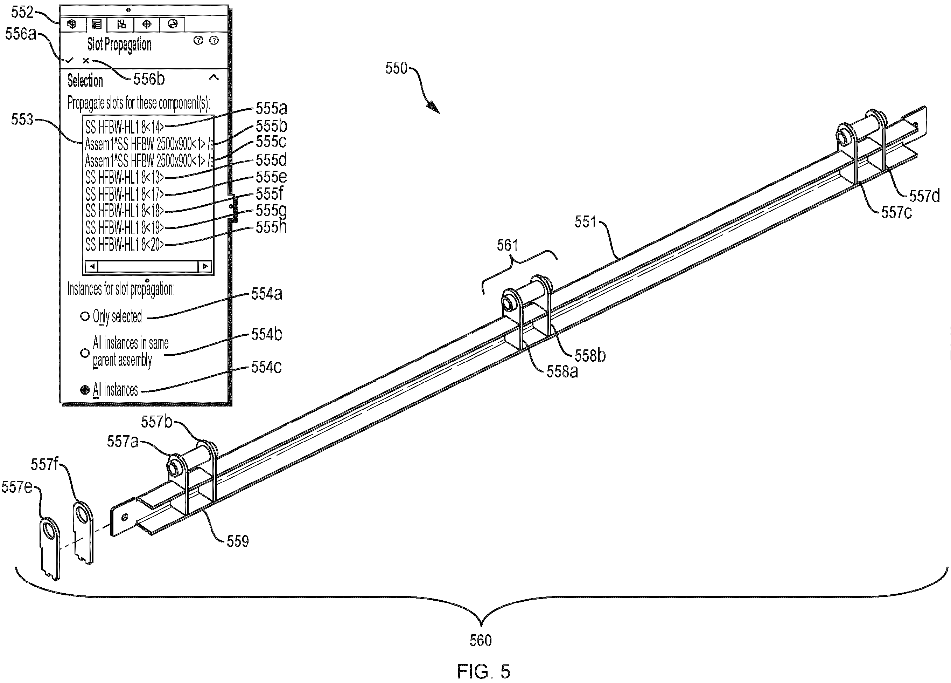

FIG. 5 depicts an interface 550 illustrating an example embodiment for automatic slot propagation in CAD model 551 that includes assembly 560 and subassembly 561. The example option depicted in FIG. 5 is automatic slot propagation for all component instance(s) in a given CAD model, e.g., CAD model 551, where each component instance in the given CAD model has a respective instance of a tab feature. As shown in FIG. 5, CAD model 551 includes tab component instances 557a-f belonging to assembly 560, as well as tab component instances 558a-b belonging to subassembly 561. The interface 550 includes menu 552 with text area 553 and radio buttons 554a-c. In the example embodiment illustrated in FIG. 5, text area 553 includes identifiers 555a-f and 555g-h corresponding to tab component instances 557a-f and 558a-b, respectively, for which slots may be propagated. The menu 552 further includes small icons or buttons 556a and 556b. In an embodiment, the menu 552 may be displayed or presented in response to a user selecting or activating a slot propagation command, e.g., by selecting menu command 223 (FIG. 2B).

In the embodiment of automatic slot propagation illustrated by interface 550, radio button 554c is selected, e.g., by the user, which indicates that automatic slot propagation is to be evaluated for all component instance(s) in the same CAD model 551 as selected instance 557a, regardless of whether such instance(s) belong to a particular assembly, such as 560 or 561. In operation, radio button 554c and component 557a are selected. In response, other component instances 557b-f and 558a-b belonging to the same CAD model 551 are identified, and, optionally, highlighted in interface 550. To continue, identifiers 555a-f and 555g-h, which may correspond to, e.g., tab instances 557a-f and 558a-b, respectively, are listed in text area 553. Optionally, selected or identified component instance(s), e.g., 557a-f and 558a-b, may further be highlighted, such as by coloring and/or shading, or by any other known highlighting technique, in a graphics area of a CAD interface, e.g., interface 550. Further, it is noted that in this example, if, for instance, radio button 554b were selected, instances 558a-b would not be highlighted because instances 558a-b are in assembly 561-outside of assembly 560, to which selected component 557a belongs. To continue, the user selects or activates button 556a or 556b to indicate whether automatic slot propagation for components 557a-f and 558a-b (which have corresponding identifiers 555a-f and 555g-h displayed in text area 553) should, or should not, proceed, respectively. If the user opts to proceed with slot propagation, slots are automatically created in component(s) that interface with slots in accordance with a selected propagation method, e.g., the method selected using radio buttons 554a-c. In the example of FIG. 5, slots are created in component 559 that interfaces with tabs on part instances 557a-d and 558a-b. It is noted that corresponding slots are not created for instances 557e and 557f because they do not interface with component 559 or any other component.

FIG. 6 is a flowchart of an example method 600 for automatic slot propagation in a CAD model, e.g., CAD model 111 (FIG. 2A), 221 (FIG. 2B), 331 (FIG. 3), 441 (FIG. 4), or 551 (FIG. 5), according to an embodiment. The method 600 is a computer-implemented method and, as such, may be implemented using any computing devices or combination of computing devices known to those of skill in the art. At step 601, the method 600 detects an invocation for a component in an assembly as a result of, e.g., a user RMB or other click or GUI interaction with a component, adding an instance of a component to a CAD model, or any other suitable action or interaction known to those of skill in the art. Next, at step 602, the method 600 determines whether the component, e.g., tab component instance 112a (FIG. 2A), has a tab feature. If not (no at step 602), the method 600 moves to step 603, where the method 600 refrains from showing or displaying an automatic slot propagation command, e.g., menu command 223 of menu 222 (FIG. 2B). However, if at step 602 it is determined that the component has a tab feature, the method 600 moves to step 604.

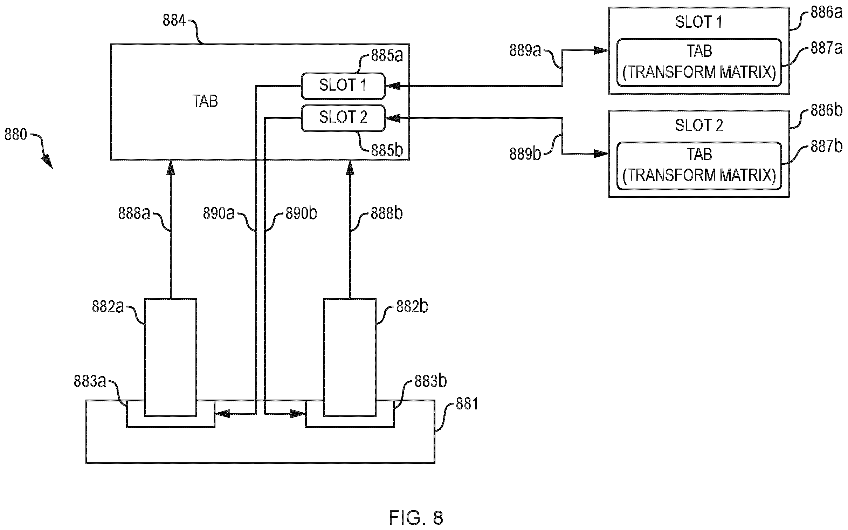

In an embodiment, a tab feature may have an associated data structure, e.g., a list or array, that contains information, such as reference(s) or pointer(s), regarding instance(s) of a corresponding slot feature that corresponds to the tab feature. Similarly, according to an embodiment, an instance of a slot feature may have an associated data structure that contains information, such as a reference or pointer, regarding a tab feature that corresponds to the slot feature. In this way, a tab feature may be paired with instance(s) of a corresponding slot feature, and likewise an instance of a slot feature may be paired with a corresponding tab feature. Further details regarding tab and slot data structures that may be used in embodiments are described hereinbelow in relation to FIG. 8.

Continuing with step 604 of FIG. 6, in an embodiment, the method 600 may use the aforementioned data structures to determine if a slot feature exists for the tab feature of the component invoked at step 601. According to an embodiment, determining, at step 604, if a slot exists that corresponds to the tab feature includes checking a tab data structure to see if a reference exists between the tab data structure (corresponding to the tab feature on the component instance invoked at step 601) and a slot instance of a slot data structure. In one such embodiment of the method 600, this checking at step 604 is performed by analyzing data structure(s), such as data structure(s) 884, 886a, and/or 886b described hereinbelow in relation to FIG. 8.

Referring again to FIG. 6, if the method 600 determines at step 604 that a corresponding slot feature already exists for the tab feature, the method 600 then proceeds to step 603 and the slot propagation command, e.g., menu command 223 of menu 222, is not shown. Otherwise, if it is determined at step 604 that a corresponding slot feature does not exist for the tab feature, the method 600 moves to step 605. However, it is noted that in some embodiments, the method 600 may proceed to step 605 even if a corresponding slot feature is determined to exist at step 604. To elaborate, the method 600 (as illustrated in FIG. 6) performs functionality in which a slot is propagated for a selected/invoked tab component. Such functionality is described hereinabove in relation to FIG. 3. However, the method 600 may also be configured to implement the functionality described hereinabove in relation to FIGs. 4-5, namely, propagating slots for all tab component instances in the same assembly as the selected tab component (FIG. 4) or all tab component instances in the CAD model (FIG. 5). In such a modified embodiment of the method 600, the logic at step 604 may consider if the invoked, e.g., selected, tab component has a slot and if other tab component instances (e.g., in the same parent assembly or CAD model) already have slots. Simply, step 604 may consider if there are any tab component instances (in accordance with the selected propagation type) for which slot propagation should be evaluated. In this modified example, if there are tab instances for which slot propagation should be considered, e.g., a tab without a slot, the method 600 moves to step 605.

To continue with FIG. 6, at step 605, the method 600 displays or presents the slot propagation command, e.g., menu command 223 of menu 222. Next, at step 606, the method 600 determines if the slot propagation command is initiated, such as by the user clicking, selecting, or otherwise activating the command. If the propagation command is not initiated at step 606, the method 600 moves to step 607 where no action is performed by the method 600. Otherwise, if the slot propagation command is initiated (as determined at step 606) the method 600, at step 608, determines if instance(s) of the tab feature, e.g., tab component instance 112a, interface with other component(s) of the assembly. It is noted that while step 608 in FIG. 6 refers to checking if instances of a tab interface with other components in the assembly, embodiments of FIG. 6 are not limited to checking if instances in a single assembly interface with components. Instead, similar to the embodiment described hereinabove in relation to FIG. 5, embodiments of the method 600 may operate across multiple assemblies and CAD models.

According to an embodiment, an interference check is performed at step 608 of method 600 to determine if an instance of a tab feature, e.g., tab component instance 112a (FIG. 2A), interfaces with a component. In one such embodiment, performing an interference check may include applying a transform to determine if two bodies, parts, or components are so close to each other that one body can make a cut in the other. For example, according to an embodiment, an interference check may be used to determine if an instance of a tab feature, e.g., tab component instance 112a, is touching or cutting another component or part. Thus, in an embodiment, an interference check may be used to determine if two geometries are touching or otherwise clashing, colliding, or interfering with each other.

In an example embodiment, performing an interference check may include calculating and/or applying transform operation(s) to component(s) in a CAD model, e.g., CAD model 111 (FIG. 2A). According to one such embodiment, transform operation(s) may be calculated and/or applied via a mathematical computation library or application programming interface (API), or any other suitable library or API known to those of skill in the art. In another embodiment, each component's position is given by its own individual coordinate system. In such an embodiment, performing an interface check at step 608 of method 600 includes determining positions of components in a common or shared coordinate system. For example, according to one such embodiment, a tab feature's location with respect to its own component's (e.g., tab component instance 112a) coordinate system may be at (5.0, 5.0, 5.0), but when the component is placed in an assembly, e.g., assembly 115 (FIG. 2A), its location may be at (10.0, 10.0, 10.0) with respect to the assembly's coordinate system. As such, according to an embodiment, the interface check at step 608 of method 600 may include determining the position of potential engaging components in the assembly coordinate system. Similarly, performing the interface check at step 608 may include determining one component's position in another component's coordinate system. In this way, such an embodiment evaluates possible interfacing between components in a common or shared coordinate system.

Such functionality may include utilizing a transform operation to compute a tab feature location in an assembly's coordinate system by identifying the tab feature's location in its own component's (e.g., 112a) coordinate system and then multiplying the identified location by a transformation matrix. According to an embodiment, a further calculation may be performed to determine if a transform indicates that an interface, e.g., an interference, exists between two components. In one such embodiment, determining an existence of an interface may be based on a location of a tab feature and/or a slot feature in an assembly coordinate system. In particular, a transform operation may be performed on the tab's location and the location of the component on which the slot will be created, so as to determine the location of the tab and potential slot in the same coordinate system (e.g., the assembly coordinate system). In this way, such an embodiment can determine if the tab will interface with the component on which the slot will be created.

According to another embodiment, a component in a CAD model, e.g., tab component instance 112a, may include (x,y,z) coordinates that indicate the component's position in the CAD model, e.g., CAD model 111 (FIG. 2A). Further, in an example embodiment, an edge or face of a component, e.g., tab component instance 112a, may include a plurality of points. According to one such example embodiment, a transform may be computed to determine if any of the plurality of points interfere, e.g., intersect, with other component(s) in the CAD model. In another embodiment, such a computation may be performed via a math library or API, or any other suitable library or API known to those of skill in the art. Further, in yet another embodiment, when a CAD model, e.g., CAD model 111, includes a complex hierarchy of assemblies, each with its own components, then performing interference checking may include computing multiple transforms.

Continuing further with FIG. 6, if it is determined at step 608 that the instance of the tab feature, e.g., tab component instance 112a, does not interface with other component(s) of the assembly, the method 600 then proceeds to step 607 and no action is taken. Otherwise, if it is determined at step 608 that the instance of the tab does interface with other component(s), the method 600 moves to step 609 and propagates an instance of the corresponding slot feature.

In an embodiment, at step 609, the method 600 may identify a tab transform operation associated with the tab feature. The method 600 may further identify slot body(ies) associated with the tab feature. According to an embodiment, a slot body may also be called an interfering body and may refer to a location where a slot is to be propagated. In another embodiment, the method 600 may, based on the tab transform operation, determine or calculate a transform needed to make a cut for an instance of the corresponding slot feature. Further, in yet another embodiment, the method 600 may also perform automatic slot propagation by creating new instance(s) of the corresponding slot feature in component(s) of the assembly where instance(s) of the tab feature, e.g., tab component instance 112a, were determined at step 608 to interface with the component(s).

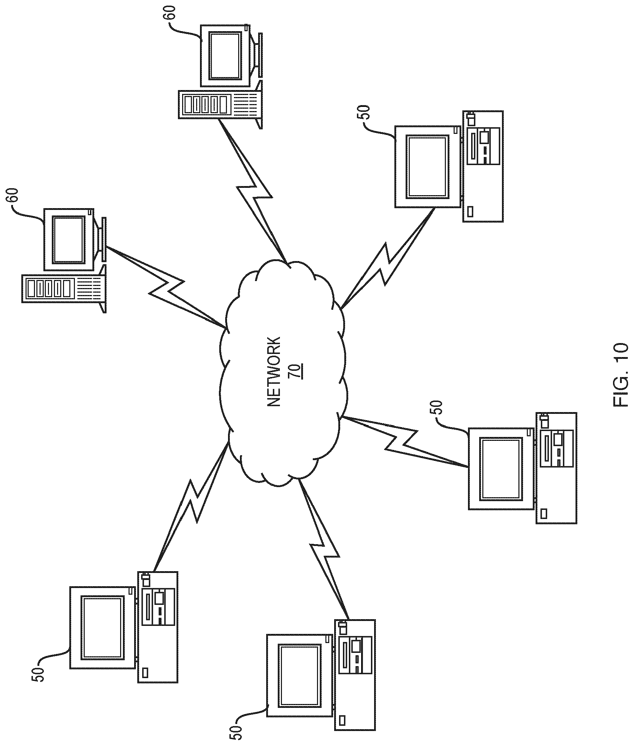

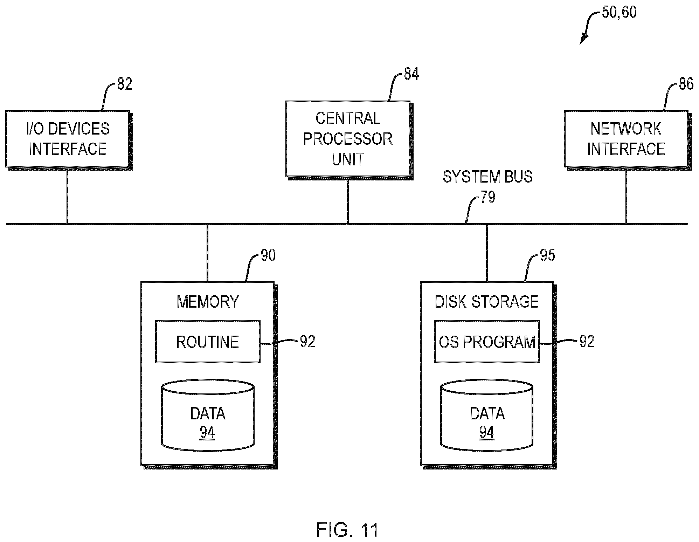

As noted, the method 600 is computer-implemented and, as such, the functionality and effective operations, e.g., steps 601-609, are automatically implemented by one or more digital processors. Moreover, the method 600 can be implemented using any computer device or combination of computing devices known in the art. Among other examples, the method 600 can be implemented using computer(s)/device(s) 50 and/or 60 described hereinbelow in relation to FIGs. 10 and 11. Further, it is noted that while the method 600 is described as being performed for a tab instance, the method 600 may be simultaneously performed for a plurality of tab instances and, as such, a plurality of slots may be created simultaneously.

In an embodiment, the automatic slot propagation functionality of the method 600 is also implemented when a component in an assembly, e.g., tab component instance 112a , is being patterned, mirrored, or otherwise duplicated, copied, or replicated. Further, it is noted that embodiments of the method 600 are not limited to operating in a single assembly and the slot propagation functionality may be implemented in multiple distinct assemblies that contain the part.

Further, in yet another embodiment, if multiple configurations of a part or component exist, where some configurations have a tab feature and some do not, then, the method 600 may ensure that an automatic slot propagation command, e.g., menu command 223 included by menu 222 (FIG. 2B), is available only for configurations with the tab feature.

### Tab and Slot Association

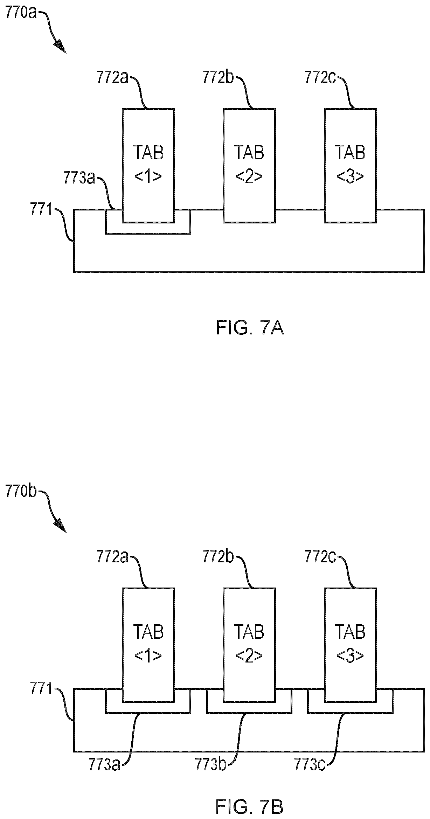

FIGs. 7A and 7B illustrate an example assembly before 770a and the assembly after 770b slot propagation, respectively, according to an embodiment. As shown in FIG. 7A, prior to slot propagation, assembly 770a includes component 771, instances 772a-772c of a tab feature and instance 773a of a corresponding slot feature for the tab instance 772a. In the assembly 770a, instance 773a of the slot feature is a counterpart to instance 772a of the tab feature, while instances 772b and 772c of the tab feature lack such counterpart instances of the slot feature. However, according to an embodiment, automatic slot propagation can be used to propagate slots for instances 772b and 772c of the tab feature.

As shown in FIG. 7B, following slot propagation (e.g., through use of methods 600 and 900 described herein with respect to FIGs. 6 and 9, respectively), assembly 770b further includes instances 773b and 773c of the corresponding slot feature. In an embodiment, instances 773b and 773c are counterparts to instances 772b and 772c, respectively, of the tab feature.

### Geometry Update Mechanism

FIG. 8 is a schematic illustration of an exemplary CAD model 880 and data structures 884 and 886a-b used in conjunction with CAD model 880. As shown in FIG. 8, CAD model 880 includes component 881, instances 882a and 882b of a tab feature, and slot features 883a and 883b in component 881. In CAD model 880, slots 883a and 883b correspond to tabs 882a and 882b, respectively. According to an embodiment, definitions (e.g., geometric definitions) of tabs 882a and 882b in CAD model 880 also each include, in memory, a reference (e.g., pointers 888a and 888b, respectively) linking tabs 882a-b to tab feature data structure 884. The tab feature data structure 884 indicates the properties of the tab feature and includes indicators 885a and 885b of slots (883a-b, respectively) associated with the tab feature. Each slot indicator 885a-b includes a respective reference, pointers 889a-b, linking the slot indicators 885a-b to corresponding slot data structures 886a and 886b. Each slot indicator 885a-b also includes a pointer 890a-b linking the slot indicators 885a-b to the appropriate slot instances 883a-b in CAD model 880. Further, each slot data structure 886a and 886b includes a respective indicator of associated tab transform matrices 887a-b. In one such embodiment, each matrix 887a and 887b is a spatial transformation matrix or any other known transformation matrix, which may define a location of a corresponding tab instance, e.g., 882a and 882b. According to another embodiment, a transformation matrix may be used to create a slot instance corresponding to a tab instance defined by the transformation matrix.

In an embodiment, when an instance of a slot feature, e.g., 773a, 773b, or 773c (FIG. 7B), is propagated, such as via method 600 (FIG. 6) or 900 (FIG. 9), to an assembly component, e.g., component 771 (FIG. 7A), a tab data structure, e.g., tab data structure 884, may be associated with a slot data structure, e.g., slot data structure 886a or 886b.

According to another embodiment, a tab data structure, e.g., tab data structure 884, may be configured to store a list of references to propagated slot data structures, e.g., references 889a or 889b.

In yet another embodiment, when geometry of a tab, e.g., a tab feature having instances 772a-772c (FIG. 7A), is updated, notification(s) may be sent to propagated slot(s), e.g., instances 773a, 773b, and/or 773c. Thus, according to one such embodiment, a slot geometry update may be driven by a corresponding change in tab geometry. Propagating a change in geometry of a tab to geometry of a slot in this manner may be referred to as a "parametric connection" or "parametric modeling."

In another embodiment, a slot data structure, e.g., 886a or 886b, may store information about a location of a corresponding tab instance, e.g., 882a or 882b. The information about the location of the tab instance may be in the form of a spatial transformation matrix, e.g., 887a or 887b. Moreover, the information (stored in the slot data structure) indicating the location of the tab may be included with a reference to the tab.

Below is pseudo code illustrating exemplary tab and slot data structures according to an embodiment.

```
 class TabFeature
 {
 Array ListOfPropagatedSlots;
 }
 class SlotFeature
 {
 PropagateSlot()
 {
 }
 TabFeature* TabFeatureReference;
  Transformation TabTransformation;
}
```

Referring to the above pseudo code, in an embodiment, a tab data structure, e.g., tab data structure 884, may be represented by an object that is an instance of a class, such as class TabFeature. In turn, according to one such embodiment, instances of class TabFeature may include an array ListOfPropagatedSlots, or other suitable known data structure, that contains slot indicators 885a-b and associated references 889a and 889b to respective slot data structures 886a and 886b, each of which represents a slot that was propagated for tab feature 884. Likewise, in another embodiment, a slot data structure, e.g., slot data structure 886a and/or 886b, may be represented by an object that is an instance of a class, such as class SlotFeature. According to one such embodiment, instances of class SlotFeature may include a reference, TabFeatureReference, which may be a reference to a corresponding instance of class TabFeature, e.g., tab feature 884. Further, in yet another embodiment, instances of class SlotFeature may include an instance of Transformation class Tab Transformation, which may be a transformation matrix, e.g., 887a or 887b, that defines a location of a corresponding tab component in an assembly. Lastly, in an embodiment, instances of class SlotFeature may include a method or function PropagateSlot() that implements logic to generate a slot cut in a slot component by, for example, retrieving a corresponding tab body, applying a transformation, and using the transformation matrix to generate the slot cut.

### Location Update Mechanism

According to an embodiment, when a component with a tab is relocated, a corresponding slot location may be updated. According to one such embodiment, when a tab component is relocated in a CAD model/assembly, the updated location of the tab component is compared with a stored indication of location of the tab component. In an embodiment, an indication of location is stored in a corresponding slot data structure. If a mismatch is identified between the updated location of the tab component and the stored indication of location of the tab component (e.g., in the slot data structure), the stored indication of location of the tab component is revised to conform to the updated location. According to an example embodiment, identifying a mismatch may include determining whether a transform, e.g., a spatial transformation matrix, remains valid. For example, in one such embodiment, a stored indication of location may include a transformation matrix, e.g., 887a or 887b (FIG. 8), which may be compared with a current transformation matrix of a tab instance, e.g., 882a or 882b (FIG. 8), to determine if the former is outdated.

### Exemplary Method Embodiment

FIG. 9 is a flowchart of a method 900 for automatic slot propagation in a CAD model according to an embodiment. The method 900 is a computer-implemented method performed by a processor, in relation to a CAD model. It is noted that while the description herein refers to functionality in relation to a CAD model, embodiments may be implemented in relation to any computer-based model known to those of skill in the art.

The method 900 begins at step 901 by identifying a first instance of a tab feature in a CAD model. The first instance of the tab feature is associated with a corresponding first instance of a slot feature. To continue, at step 902, the method 900 identifies a second instance of the tab feature in the CAD model. In turn, at step 903, the method 900 automatically propagates the slot feature by creating a second instance of the slot feature in a component of the CAD model. The created second instance of the slot feature corresponds to the identified second instance of the tab feature.

As noted, the method 900 is computer-implemented and, as such, the functionality and effective operations, e.g., the identifying (901 and 902) and propagating (903), are automatically implemented by one or more digital processors. Moreover, the method 900 can be implemented using any computer device or combination of computing devices known in the art. Among other examples, the method 900 can be implemented using computer(s)/device(s) 50 and/or 60 described hereinbelow in relation to FIGs. 10 and 11.

In an embodiment of the method 900, identifying the second instance of the tab feature (902) includes identifying a given instance of the tab feature in the CAD model that is not associated with a corresponding instance of the slot feature. The identified given instance is the identified second instance of the tab feature. For example, in one such embodiment, an instance of a tab feature may be identified as not being associated with an instance of a corresponding slot feature by querying a data structure associated with the tab feature, where the data structure stores reference(s) to existing instance(s) of the corresponding slot feature. According to another embodiment, identifying the given instance of the tab feature includes determining that the given instance of the tab feature interfaces with the component of the CAD model. For example, at step 902, such an embodiment may identify a tab instance that interfaces, e.g., intersects/interferes, with a part (e.g., the component) in the CAD model, where the part does not have a slot that corresponds with the identified tab instance.

In an embodiment of the method 900, the second instance of the tab feature is identified (902) in response to a user interaction with an interface, e.g., a graphical user interface (GUI), of a CAD system. According to one such embodiment, the method 900 further includes presenting the interface of the CAD system in response to identifying the second instance of the tab feature.

In another embodiment of the method 900, creating the second instance of the slot feature in the component of the CAD model (903) includes, based on a tab transform operation associated with the tab feature, applying a slot transform operation to the component of the CAD model. According to one such embodiment, a tab transform operation may be a calculation, such as a matrix calculation or other suitable calculation known to those of skill in the art, that defines an instance of a tab feature for a part/component. In an embodiment, a slot transform operation, e.g., a calculation to construct an instance of a corresponding slot feature in a component, may be derived from the tab transform operation.

In yet another embodiment, the method 900 further includes storing, in a data structure associated with the tab feature, a reference to the created second instance of the slot feature. According to another example embodiment, the method 900 further includes storing, in a data structure associated with the created second instance of the slot feature, a reference to the tab feature. In one such embodiment, the reference to the tab feature includes a transform matrix. As discussed above, in an embodiment, a transform matrix may be a matrix that is used as part of a calculation to construct or generate an instance of a slot feature. According to an embodiment, a transformation matrix (i.e., a tab transformation matrix) is stored with a slot data structure and applied to a tab body and used to generate a slot cut in a slot component (i.e., the component in which the slot instance is generated).

In another embodiment, the method 900 further includes determining a location update of a given instance of the tab feature and modifying, based on the determined location update, a location of a given instance of the slot feature corresponding to the given instance of the tab feature. According to one such embodiment, determining the location update of the given instance of the tab feature includes identifying a mismatch between a location of the given instance of the tab feature in the CAD model (i.e., the location of the given instance of the tab in the CAD model as it currently exists) and a stored indication of the location of the given instance of the tab feature. For example, such an embodiment may determine that the record of the location and the actual location in the CAD model do not match. According to an embodiment, the stored indication of the location is in a slot data structure associated with the given instance of the slot feature. In an example embodiment, the stored indication of the location includes a spatial transformation matrix.

### Advantages

Embodiments automatically propagate slots on components that interface/intersect instance(s) of a tab part or component. Such functionality may be executed responsive to selecting an instance of the tab component and may be carried out for any desired tab instances. For example, slot propagation may be performed for a selected tab instance, all tab instance(s) in a parent assembly, or all tab instance(s) in a CAD model. Users of CAD systems are thus freed from manually creating cut-out(s) for missing slot(s). This results in significant time savings, improved efficiency, and reduced costs, as well as increased accuracy for design of CAD models and corresponding manufactured real-world products/objects. Further, automatically propagating slots greatly improves user-ergonomics.

Computer-based modeling is often an essential step in manufacturing real-world objects. The embodiments described herein provide improved functionality for designing components and parts with tabs and slots and, as such, improve the real-world object manufacturing process. The use of tabs and slots on real-world objects improves the real-world tasks of assembly and welding and alleviates the need to physically manufacture and/or produce complex fixtures to hold parts together. As such, by improving the methods for designing real-world objects with tabs and slots using the functionality described herein, e.g., method 600 (FIG. 6) or 900 (FIG. 9), embodiments ultimately provide improvements to welding and assembly of real-world objects.

### Computer Support

FIG. 10 is a schematic view of a computer network in which embodiments may be implemented.

Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. Communications network 70 can be part of a remote access network, a global network (e.g., the Internet), cloud computing servers or service, a worldwide collection of computers, local area or wide area networks, and gateways that currently use respective protocols (TCP/IP (Transmission Control Protocol/Internet Protocol), Bluetooth^{®}, etc.) to communicate with one another. Other electronic device/computer network architectures are suitable.

FIG. 11 is a block diagram illustrating an example embodiment of a computer node (e.g., client processor(s)/device(s) 50 or server computer(s) 60) in the computer network of FIG. 10. Each computer node 50, 60 contains system bus 79, where a bus is a set of hardware lines used for data transfer among components of a computer or processing system. Bus 79 is essentially a shared conduit that connects different elements of a computer system (e.g., processor, disk storage, memory, I/O ports, network ports, etc.) that enables transfer of information between the elements. Attached to system bus 79 is I/O device interface 82 for connecting various input and output devices (e.g., keyboard, mouse, display(s), printer(s), speaker(s), etc.) to the computer node 50, 60. Network interface 86 allows the computer node to connect to various other devices attached to a network (e.g., network 70 of FIG. 10). Memory 90 provides volatile storage for computer software instructions 92 and data 94 used to implement an embodiment of the present disclosure (e.g., the methods 600 and 900 described hereinabove with respect to FIGs. 6 and 9, respectively). Disk storage 95 provides non-volatile storage for computer software instructions 92 and data 94 used to implement an embodiment of the present disclosure. Central processor unit 84 is also attached to system bus 79 and provides for execution of computer instructions.

In one embodiment, the processor routines 92 and data 94 are a computer program product (generally referenced as 92), including a computer readable medium (e.g., a removable storage medium such as DVD-ROM(s), CD-ROM(s), diskette(s), tape(s), etc.) that provides at least a portion of the software instructions for the disclosure system. Computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternate embodiments, the propagated signal is an analog carrier wave or digital signal carried on the propagated medium. For example, the propagated signal may be a digitized signal propagated over a global network (e.g., the Internet), a telecommunications network, or other network (such as network 70 of FIG. 10). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

## Claims

1. A computer-implemented method for automatic slot propagation in a computer-aided design (CAD) model, the computer-implemented method comprising, by a processor:
in the CAD model:
identifying a first instance of a tab feature, the first instance of the tab feature associated with a corresponding first instance of a slot feature;
identifying a second instance of the tab feature; and
automatically propagating the slot feature by creating a second instance of the slot feature in a component of the CAD model, the second instance of the slot feature corresponding to the identified second instance of the tab feature.

2. The method of Claim 1, wherein identifying the second instance of the tab feature comprises:
identifying a given instance of the tab feature in the CAD model not associated with a corresponding instance of the slot feature, the identified given instance being the identified second instance of the tab feature.

3. The method of Claim 2, wherein identifying the given instance of the tab feature comprises:
determining that the given instance of the tab feature interfaces with the component of the CAD model.

4. The method of any of Claims 1 to 3, wherein creating the second instance of the slot feature in the component of the CAD model comprises:
based on a tab transform operation associated with the tab feature, applying a slot transform operation to the component of the CAD model.

5. The method of any of Claims 1 to 4, further comprising:
storing, in a data structure associated with the tab feature, a reference to the created second instance of the slot feature.

6. The method of any of Claims 1 to 5, further comprising:
storing, in a data structure associated with the created second instance of the slot feature, a reference to the tab feature.

7. The method of Claim 6, wherein the reference to the tab feature includes a transform matrix.

8. The method of any of Claims 1 to 7, wherein the second instance of the tab feature is identified in response to a user interaction with an interface of a CAD system.

9. The method of Claim 8, further comprising:
presenting the user interface of the CAD system in response to identifying the second instance of the tab feature.

10. The method of any of Claims 1 to 9, further comprising:
determining a location update of a given instance of the tab feature; and
modifying, based on the determined location update, a location of a given instance of the slot feature corresponding to the given instance of the tab feature.

11. The method of Claim 10, wherein determining the location update of the given instance of the tab feature comprises:
identifying a mismatch between (i) a location of the given instance of the tab feature in the CAD model and (ii) a stored indication of location of the given instance of the tab feature.

12. The method of Claim 11, wherein the stored indication of location includes a spatial transformation matrix.

13. A computer-based system for automatic slot propagation in a computer-aided design (CAD) model, the computer-based system comprising:
a processor; and
a memory with computer code instructions stored thereon, the processor and the memory, with the computer code instructions, being configured to cause the computer-based system to perform the method of any of Claims 1 to 12.

14. A non-transitory computer program product for automatic slot propagation in a computer-aided design (CAD) model, the non-transitory computer program product comprising a computer-readable medium with computer code instructions stored thereon, the computer code instructions being configured, when executed by a processor, to cause an apparatus associated with the processor to perfom the method of any of Claims 1 to 12.

15. A computer program comprising computer code instructions, the computer code instructions being configured, when executed by a processor, to cause an apparatus associated with the processor to perfom the method of any of Claims 1 to 12.
